# FASCICULE DE BREVET EUROPEEN

(11) **EP 0 741 057 B1**
(45) Date de publication et mention de la délivrance du brevet: **14.03.2001**
(21) Numéro de dépôt: 96400963.3
(22) Date de dépôt: 06.05.1996
(51) Int. Cl.: B60R 5/04

(54) **Cache-bagages pour véhicule automobile**
Ladagutabdeckung für eine Kraftfahrzeug
Luggage cover for an automotive vehicle

(30) Priorité: 04.05.1995 FR 9505338
(43) Date de publication de la demande: 06.11.1996
(73) Titulaire: CENTRE D'ETUDES ET RECHERCHE POUR L'AUTOMOBILE ( CERA), F-51100 Reims (FR)
(72) Inventeur: Ghebali, César, 93220 Gagny (FR); Carpentier, Alain, 51000 Reims (FR)
(74) Mandataire: Geismar, Thierry

(56) Documents cités:
- EP-A- 0 524 397
- DE-A- 2 624 947
- DE-A- 2 941 018
- DE-A- 4 040 038
- DE-A- 4 110 089
- US-A- 4 220 367

## Description

La présente invention concerne un cache-bagages pour véhicule automobile, plus particulièrement destiné à un véhicule du type monospace" ou du type "break".

Dans de tels véhicules, un large espace est disponible pour les bagages à l'arrière de la première rangée de sièges. Cet espace peut être utilisé au rangement des bagages soit en totalité, soit jusqu'à un niveau médian, correspondant à peu près au bas des vitres du véhicule, c'est à dire un peu en dessous du haut des dossiers des sièges.

Dans ce dernier cas, il peut être utile de cacher les bagages à la vue des personnes passant devant le véhicule, notamment dans le but d'éviter de tenter d'éventuels voleurs. On a proposé à cet effet, par exemple dans US-A-4220367, un cache-bagages selon le préambule de la revendication 1.

Par ailleurs, il est parfois possible dans les véhicules de ce type, d'installer dans le volume arrière une troisième rangée de sièges. A l'arrière de cette troisième rangée, un volume limité reste disponible pour des bagages, ce volume étant, lui aussi, susceptible de n'être utilisé que dans sa partie inférieure. Dans ce cas également, il est parfois souhaitable de cacher les bagages contenus dans le volume qui leur est destiné.

La présente invention vise à fournir un dispositif cache-bagages modulaire, susceptible d'être utilisé dans les diverses configurations décrites ci-dessus, pouvant être aisément démonté, et éventuellement rangé sous les sièges du véhicule.

A cet effet, l'invention a pour objet un cache-bagages pour véhicule automobile selon la revendication 1.

Lorsque trois rangées de sièges sont installées dans le véhicule, il est en outre utile de disposer, entre les dossiers des sièges de la troisième rangée et la porte de fermeture arrière, d'une tablette arrière de rangement. Cette tablette fait alors office de cache-bagages pour les objets situés en dessous d'elle. Elle peut de toute manière rester en place quel que soit le nombre de rangées de sièges installées.

Il est donc possible d'utiliser soit la tablette arrière seule dans le cas où trois rangées de sièges sont installées dans l'habitacle du véhicule, soit la tablette et le rideau si ou deux rangées de sièges seulement sont installées. Le démontage du dispositif ainsi que la séparation du rideau et de la tablette peuvent être réalisés très facilement. L'ensemble du dispositif démonté peut être logé sous les sièges de l'une quelconque des rangées de sièges du véhicule.

Dans un mode de réalisation particulier de l'invention, la tablette amovible possède à chacune de ses deux extrémités latérales, un doigt de pivotement susceptible de s'engager dans une rainure en L solidaire du véhicule, ladite rainure ayant une première partie sensiblement verticale débouchant vers le haut et une deuxième partie sensiblement horizontale s'étendant vers l'avant du véhicule à partir du bas de la première partie, des moyens d'appui, de préférence anti-vibrations, étant prévus solidaires du véhicule pour maintenir la tablette sensiblement horizontale.

Plus particulièrement, chacune des extrémités de l'enrouleur peut posséder un doigt de fixation susceptible de s'engager dans une encoche correspondante solidaire du véhicule, au moins l'une des extrémités de l'enrouleur étant montée de façon télescopique sur le corps de l'enrouleur, repoussée latéralement vers l'extérieur par des moyens élastiques.

Egalement dans un mode de réalisation particulier, lesdits profilés ont une section sensiblement circulaire.

Egalement dans un mode de réalisation particulier, le rideau et l'enrouleur à ressort sont divisés en plusieurs parties longitudinales, notamment en deux parties, dans le sens de la largeur du véhicule.

On décrira maintenant, à titre d'exemple non limitatif, un mode de réalisation particulier de l'invention, en référence aux dessins schématiques annexés dans lesquels :
- la figure 1 est une vue schématique de la partie arrière d'un véhicule du type monospace, illustrant l'implantation d'un dispositif selon
- la figure 2a est une vue de côté d'un tel dispositif;
- la figure 2b en est une demi-vue de dessus, l'autre moitié étant symétrique par rapport à l'axe 1;
- la figure 3 est une vue de côté en coupe à plus grande échelle de la figure 2a;
- la figure 4 est une vue à l'échelle de la figure 3, selon la flèche IV de la figure 2b;
- la figure 5 est une vue à plus grande échelle d'un détail de la figure 2b; et
- la figure 6 est une vue en coupe selon la ligne VI-VI de la figure 5.

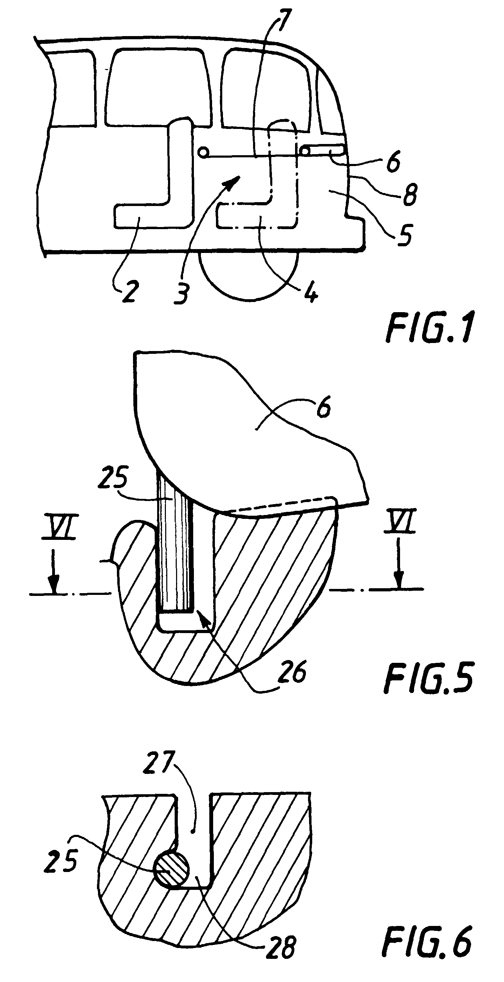

La figure 1 représente très schématiquement l'arrière d'un véhicule du type généralement appelé "monospace", dont une des caractéristiques est de comporter, à l'arrière de la deuxième rangée de sièges 2, un volume 3 pouvant être utilisé soit, dans son ensemble, pour loger des bagages, soit pour permettre l'installation d'une troisième rangée de sièges 4. Dans ce dernier cas, un volume résiduel 5 peut encore être utilisé pour le logement de bagages.

Le dispositif selon l'invention permet de cacher à la vue de l'extérieur, les bagages contenus dans la partie inférieure, soit de l'ensemble du volume 3 si la rangée de sièges 4 n'est pas installée, soit du volume résiduel 5 dans le cas contraire. Il comprend pour cela une tablette arrière 6 de type connu en elle-même, et un rideau 7 prolongeant cette dernière vers l'avant du véhicule. La tablette 6 et le rideau 7 peuvent être disposés sensiblement horizontalement d'un bord latéral intérieur à l'autre du véhicule.

La tablette 6 possède une dimension longitudinale telle que, lorsque la troisième rangée de sièges 4 est installée, elle s'étend entre le hayon 8 et l'arrière du dossier des sièges 4. Lorsque ces derniers sièges ne sont pas installés, le rideau 7 peut s'étendre entre le bord avant de la tablette 6 et l'arrière du dossier des sièges 2.

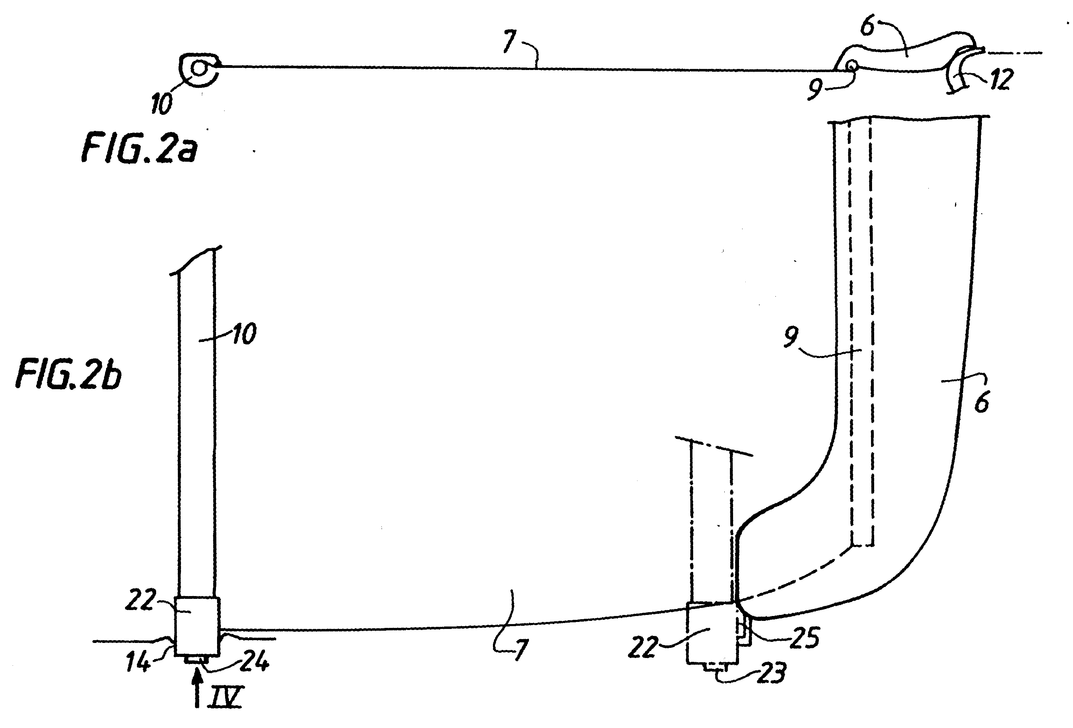

L'ensemble de la tablette 6 et du rideau 7, ainsi que leurs organes de liaison et de fixation, sont représentés plus en détail aux figures 2a et 2b.

Le rideau 7 est tendu entre un organe de maintien 9 solidaire de la tablette 6 et un enrouleur à ressort 10. La tablette 6 est amovible de même que l'enrouleur 10.

En ce qui concerne la tablette 6, elle est montée à rotation sur des axes 25 démontables, dont le fonctionnement sera décrit plus en détail ci-après, et est en appui sur des moyens d'appui solidaires du véhicule, généralement désignées par la référence 12. L'enrouleur 10 a ses extrémités qui peuvent être engagées dans des logements en U 14 ouverts vers le haut et solidaires du véhicule immédiatement en arrière de la rangée de sièges 2.

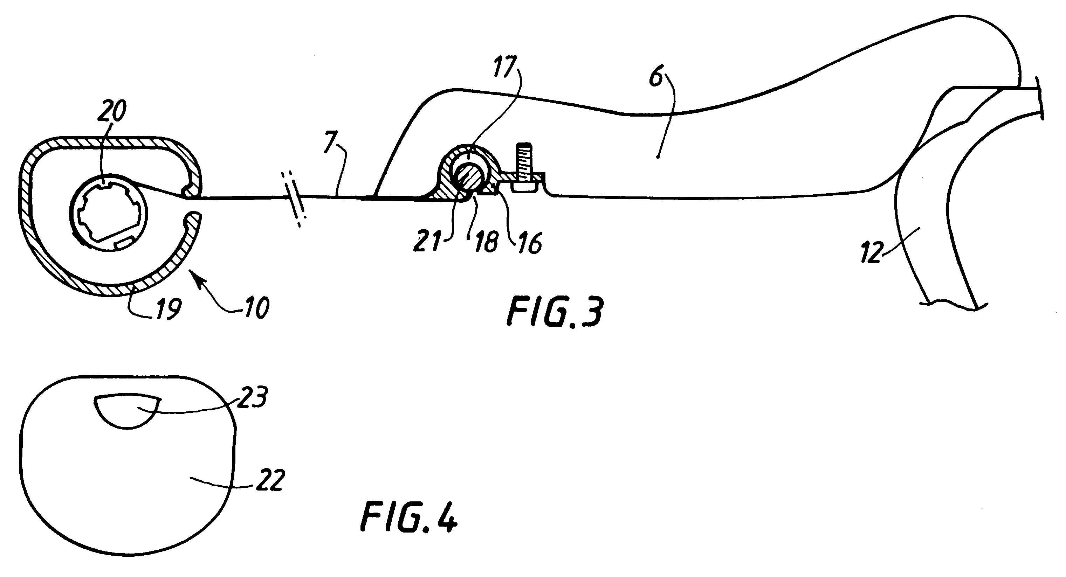

On se référera maintenant aux figures 3 et 4.

Sur la partie inférieure de la tablette arrière 6 est fixé par des moyens de fixation appropriés 15 tels que des rivets, un profilé 16 délimitant une cavité cylindrique allongée transversalement 17, ouverte à ses extrémités transversales. La cavité 17 est ouverte à l'extérieur le long d'une de ses génératrices, sur le dessous de la tablette 6, pour former une fente 18.

Le corps de l'enrouleur 10 est constitué d'un profilé 19 de forme généralement cylindrique, à l'intérieur duquel est disposé, de façon connue, un mandrin d'enroulage 20 rappelé par un ressort. Le rideau 7 est enroulé sur le mandrin 20 et est rappelé par le ressort à l'intérieur du profilé 20.

Le bord libre du rideau 7, opposé à l'enrouleur 10, est fixé à un profilé cylindrique 21 de diamètre inférieur à celui de la cavité 17. Le profilé 21 peut ainsi être engagé à l'intérieur de la cavité 17, le rideau 7 sortant de cette cavité par la fente 18.

Les embouts 22 montés aux extrémités du corps de l'enrouleur 10 possèdent des doigts de fixation 23 susceptibles de s'engager dans des renfoncements 24 ménagés dans les parois latérales des logements 14. En outre, l'un au moins des embouts 22 est monté coulissant, de façon télescopique, sur le profilé 19, permettant ainsi aux doigts 23 de s'engager dans les renfoncements 24 lorsque les extrémités de l'enrouleur 10 sont enfoncées dans les logements 14.

Si l'on se réfère maintenant aux figures 5 et 6, on voit que la tablette 6 supporte, à chacune de ses extrémités latérales, un doigt de pivotement télescopique 25 s'étendant transversalement à la direction longitudinale du véhicule. Ce doigt peut s'engager dans une rainure en L 26 solidaire du véhicule, comportant une branche verticale 27 ouverte vers le haut reliée à sa partie inférieure à une branche horizontale 28 s'étendant vers l'avant. La rainure 26 est d'une largeur légèrement supérieure au diamètre du doigt 25.

Le dispositif qui vient d'être décrit fonctionne de la manière suivante, lorsque la rangée de sièges 4 n'est pas installée.

L'installation du cache-bagages s'effectue en commençant par engager le profilé 21 dans la cavité 17, ce qui a pour effet d'assembler le rideau 7 à la tablette 6. La tablette est ensuite montée en engageant les doigts 25 au fond des branches 28 des rainures 26, et en amenant la tablette en appui sur les surfaces d'appui 12.

L'enrouleur 10 est tiré vers l'avant du véhicule, ce qui a pour effet de dérouler le rideau 7. Lorsqu'une longueur suffisante de rideau a été tirée, les embouts 22 peuvent être engagés dans leurs logements 14 respectifs, avec les doigts 23 dans les encoches 24, du fait de la liaison élastique entre les embouts 22 et le corps 10 de l'enrouleur. L'effort de traction exercé par l'enrouleur a pour effet d'appliquer et de maintenir les doigts 25 au fond de la rainure 26 et donc de maintenir la tablette 6 en place.

Dans cette position, le cache-bagages selon l'invention dissimule à la vue tout le bas du volume 3 du véhicule.

Lorsque la rangée de sièges 4 est installée, le rideau 7 n'est pas monté sur la tablette 6. Cette dernière est montée comme décrit précédemment, et dissimule alors le bas du volume 5.

Si l'on souhaite dégager totalement le volume situé à l'arrière de la rangée de sièges 2, on enlève l'ensemble du dispositif cache-bagages. A cet effet, on détache la tablette arrière 6 en la faisant basculer autour des doigts 25, et en retirant ces doigts des rainures 26. On avance alors la tablette vers l'enrouleur 10, ce qui enroule le rideau 7. En comprimant axialement les embouts 22, on dégage les doigts 23, et on retire l'ensemble de l'habitacle du véhicule.

Le dispositif peut être stocké tel quel, par exemple sous une rangée de sièges, avec l'enrouleur dans la position représentée en traits mixtes à la figure 2b, par rapport à la tablette 6. L'enrouleur peut aussi être séparé de la tablette en faisant coulisser le profilé 21 dans la cavité cylindrique 17.

Le rideau et l'enrouleur à ressort peuvent être divisés en plusieurs parties longitudinales, notamment en deux parties, dans le sens de la largeur du véhicule. Ils peuvent par exemple être divisés en une partie ayant la largeur d'un siège de la rangée médiane de sièges, et une autre partie ayant la largeur de deux sièges, de sorte que le cache-bagages puisse être utilisé lorsque l'on n'utilise que les deux sièges avant et un ou deux sièges de la rangée médiane.

Bien entendu, dans ce cas, des moyens de support sont prévus pour les enrouleurs à l'arrière des dossiers des sièges.

## Revendications

1. Cache-bagages pour véhicule automobile comprenant un rideau (7) monté sur un enrouleur à ressort (10), **caractérisé par le fait** qu'il comprend également une tablette arrière amovible (6), ledit rideau (7) étant bordé, à son extrémité longitudinale opposée audit enrouleur à ressort (10) par un profilé (21) apte à s'engager par coulissement et à être maintenu dans un autre profilé (16) de forme correspondante et solidaire de ladite tablette arrière amovible (6), ledit autre profilé (16) de la tablette arrière amovible étant fendu pour permettre le passage dudit rideau (7).

2. Cache-bagages selon la revendication 1, **caractérisé par le fait** que ladite tablette arrière amovible (6) possède à chacune de ses deux extrémités latérales, un doigt de pivotement (25) susceptible de s'engager dans une rainure en L (26) solidaire du véhicule, ladite rainure en L (26) ayant une première partie (27) sensiblement verticale débouchant vers le haut et une deuxième partie (28) sensiblement horizontale s'étendant vers l'avant du véhicule à partir du bas de la première partie, des moyens d'appui (12) étant prévus solidaires du véhicule pour maintenir la tablette arrière amovible (6) sensiblement horizontale.

3. Cache-bagages selon l'une quelconque des revendications 1 et 2, **caractérisé par le fait** que chacune des extrémités de l'enrouleur à ressort (10) possède un embout (22) muni d'un doigt de fixation (23) susceptible de s'engager dans une encoche (24) correspondante solidaire du véhicule, au moins l'un desdits embouts (22) étant montée de façon télescopique sur l'enrouleur à ressort (10), et repoussée latéralement vers l'extérieur par des moyens élastiques.

4. Cache-bagages selon l'une quelconque des revendications 1 à 3, **caractérisé par le fait** que lesdits profilés (16, 21) ont une section sensiblement circulaire.

5. Cache-bagages selon l'une quelconque des revendications 1 à 4, **caractérisé par le fait** que le rideau (7) et l'enrouleur à ressort (10) sont divisés en plusieurs parties longitudinales.

## Patentansprüche

1. Gepäckabdeckung für ein Kraftfahrzeug, die einen an einer Feder-Aufwickelvorrichtung (10) angebrachten Vorhang (7) aufweist, dadurch gekennzeichnet, daß sie des weiteren eine entfernbare Laderaumabdeckung (6) aufweist, wobei der Vorhang (7) an seinem der Feder-Aufwickelvorrichtung (10) gegenüberliegenden Längsende durch ein Profil (21) begrenzt wird, das durch Verschieben in ein fest mit der entfernbaren hinteren Laderaumabdeckung (6) verbundenes anderes Profil (16) entsprechender Form eingreifen und in diesem gehalten werden kann, wobei das andere Profil (16) der entfernbaren hinteren Laderaumabdeckung (6) geteilt ist, damit der Vorhang (7) hindurchpaßt.

2. Gepäckabdeckung nach Anspruch 1, dadurch gekennzeichnet, daß die entfernbare hintere Laderaumabdeckung (6) an jedem ihrer beiden seitlichen Enden einen Schwenkzapfen (25) aufweist, der in eine in dem Fahrzeug ausgebildete L-förmige Nut (26) eingreifen kann, wobei diese L-förmige Nut (26) einen im wesentlichen vertikalen, nach oben offenen ersten Teil (27) und einen im wesentlichen horizontalen, vom Unterteil des ersten Teils zur Front des Kraftfahrzeugs verlaufenden zweiten Teil (28) aufweist, wobei fest mit dem Fahrzeug verbundene Stützmittel (12) zum im wesentlichen horizontalen Halten der entfernbaren hinteren Laderaumabdeckung (6) vorgesehen sind.

3. Gepäckabdeckung nach Anspruch 1 oder 2, dadurch gekennzeichnet, daß jedes der Enden der Feder-Aufwickelvorrichtung (10) ein Endstück (22) aufweist, das mit einem Befestigungsstift (23) versehen ist, der in eine in dem Fahrzeug ausgebildete entsprechende Vertiefung eingreifen kann, wobei mindestens eines der Endstücke (22) zusammenschiebbar an der Feder-Aufwickelvorrichtung (10) angebracht ist und durch elastische Mittel seitlich nach außen geschoben wird.

4. Gepäckabdeckung nach einem der Ansprüche 1 bis 3, dadurch gekennzeichnet, daß die Profile (16, 21) einen im wesentlichen kreisrunden Querschnitt aufweisen.

5. Gepäckabdeckung nach einem der Ansprüche 1 bis 4, dadurch gekennzeichnet, daß der Vorhang (7) und die Feder-Aufwickelvorrichtung (10) in mehrere Längsteile geteilt sind.

## Claims

1. Motor vehicle luggage screen comprising a curtain (7) mounted on a spring-winder (10), characterized in that it also comprises a removable rear parcel shelf (6), the said curtain (7) being bordered, at its longitudinal end opposite the said spring-winder (10) by a section piece (21) capable of sliding engagement and retention in another section piece (16) of corresponding shape and secured to the said removable rear parcel shelf (6), the said other section piece (16) of the removable rear parcel shelf being slotted to allow for the passage of the said curtain (7).

2. Luggage screen according to Claim 1, characterized in that the said removable rear parcel shelf (6) has, at each of its two side ends, a pivoting finger (25) capable of engaging in an L-shaped groove (26) integral with the vehicle, the said L-shaped groove (26) having a substantially vertical first part (27) opening at the top and a substantially horizontal second part (28) extending towards the front of the vehicle from the bottom of the first part, supporting means (12) being provided, these being integral with the vehicle, for holding the removable rear parcel shelf (6) substantially horizontal.

3. Luggage screen according to either one of Claims 1 and 2, characterized in that each of the ends of the spring-winder (10) has an end fitting (22) equipped with an attachment finger (23) capable of engaging in a corresponding recess (24) integral with the vehicle, at least one of the said end pieces (22) being mounted telescopically on the spring-winder (10) and pushed laterally outwards by elastic means.

4. Luggage screen according to any one of Claims 1 to 3, characterized in that the said section pieces (16, 21) have a substantially round cross section.

5. Luggage screen according to any one of Claims 1 to 4, characterized in that the curtain (7) and the spring-winder (10) are split into a number of longitudinal parts.
